# EUROPEAN PATENT APPLICATION

(11) **EP 4 718 412 A1**
(43) Date of publication of application: **01.04.2026**
(21) Application number: 24202404.0
(22) Date of filing: 25.09.2024
(51) Int. Cl.: G07F 7/06, G06Q 30/0645, G06Q 10/0837, G06Q 10/30

(54) **A PALLET RECEIVING SYSTEM AND METHOD THEREOF**

(71) Applicant: JPI Automatic ApS, 8783 Hornsyld (DK)
(72) Inventor: Cramer, Claus, 8700 Horsens (DK)
(74) Representative: Patrade A/S

(57) **Abstract**

The present invention relates to a pallet receiving system (100) for receiving associated pallets (200) being received from a user (300), said system comprising: a pallet receiving portion (400) for receiving one or more pallets, preferably a drawer arrangement, a pallet storing unit (500), registration means for registration of received pallet(s), a calculating system for calculating the economic disbursement to the user, a user unit (600) with a user interface for the user to engage with, and wherein, the pallet receiving portion (400) is adapted to move into and out from the lower part of the pallet storing unit (500), preferably into and out from the bottom of the storage unit.

Furthermore, the invention relates to a method for receiving one or more associated pallets being received from a user.

## Description

### FIELD OF THE INVENTION

The present invention relates to a pallet receiving system for receiving associated pallets being received from a user, said system comprising:
- a pallet receiving portion for receiving one or more pallets, preferably a drawer arrangement,
- a pallet storing unit,
- registration means for registration of received pallet(s), preferably being one or more sensors, such as optic and/or mechanical sensors,
- a calculating system for calculating the economic disbursement to the user,
- a user unit with a user interface for the user to engage with, and

wherein, the pallet receiving portion is adapted to move into and out from the lower part of the pallet storing unit, preferably into and out from the bottom of the storage unit, and
wherein the pallet receiving system can take at least two positions:
   - a first position, wherein the receiving portion is open and positioned to receive a pallet from the user,
a second position, wherein the receiving portion is closed and positioned to store a received pallet into the pallet storage unit.

Furthermore, the invention relates to a method for receiving one or more associated pallets being received from a user, wherein said method comprises the steps of:
- loading pallets into a receiving portion, preferably the receiving portion being a drawer arrangement,
- moving the receiving portion comprising a pallet into a pallet storing unit, preferably moving the receiving portion on a rail arrangement,
   - wherein the movement is made manually or automatically,
- registering a reception of a pallet,
- lifting the pallet in the storing unit, preferably automatically,
- repeating the above steps if more pallets are to be received,
- providing a receipt when all pallets are received, either a physical or digital receipt,
- preferably, redeeming the receipt in a store, warehouse or the like by the user.

### BACKGROUND OF THE INVENTION

Within the area of handling pallets after the pallets has been used for a purpose, there is a huge problematic of ensuring the collection, transportation, sorting, and recycling of pallets from individual users into the professional circulation.

Today, numerous solutions of systems for handing in and receiving used pallets are available, however none of those systems provides an optimal pallet system, wherein private persons or small businesses have an simple, effortless and easy accessible opportunity to handing in the used pallets.

Hence, an improved system being efficient and reliable, suitable for handing in and receiving pallets would be advantageous, and in particular a resistant, mechanical strong, economically, sustainable system with longevity would be advantageous.

### OBJECT OF THE INVENTION

It is an object of the present invention to provide an alternative to the prior art.

In particular, it may be seen as an object of the present invention to provide a system that solves the above-mentioned problems.

### DESCRIPTION OF THE INVENTION

Thus, the above-described object and several other objects are intended to be obtained in a first aspect of the invention by providing a pallet receiving system for receiving associated pallets being received from a user, said system comprising:
- a pallet receiving portion for receiving one or more pallets, preferably a drawer arrangement,
- a pallet storing unit,
- registration means for registration of received pallet(s), preferably being one or more sensors, such as optic and/or mechanical sensors,
- a calculating system for calculating the economic disbursement to the user,
- a user unit with a user interface for the user to engage with, and

wherein, the pallet receiving portion is adapted to move into and out from the lower part of the pallet storing unit, preferably into and out from the bottom of the storage unit, and
wherein the pallet receiving system can take at least two positions:
   - a first position, wherein the receiving portion is open and positioned to receive a pallet from the user, and
   - a second position, wherein the receiving portion is closed and positioned to store a received pallet into the pallet storage unit.

The invention is particularly, but not exclusively, advantageous for ensuring the collection, transportation, sorting, and recycling of pallets from individuals into the professional circulation, which will extend the lifecycle of pallets and reduce the CO₂ emissions.

The system can be adapted to fit any desired pallet.

The pallets may as examples be such as EU pallet, UK pallets, US pallets, single-use pallets, wood, plastic and/or polymer pallets, etc. In the context of the present invention, a "pallet receiving system" may be understood as a Pallet return system or the like.

In the context of the present invention, "receiving" may be understood as collecting, gathering, take (in), accept, or the like.

In the context of the present invention, a "pallet storing unit" may be understood as a magazine, a container, a box or the like.

The storing unit is preferably, though not necessarily:
- Constructed of mild steel, and/or
- Galvanised - e.g. allowing an order of any RAL color.

In the context of the present invention, a "disbursement" may be understood as a compensation, payment or the like.

The user, that delivers the pallet/pallets receives a receipt with the number of delivered pallets in response to a certain value, which can be redeemed.

In the context of the present invention, a "registration means" is preferably sensors. The registration means is preferably used to know if the pallet receiving portion, such as a drawer, is open or closed, and/or if the stack of pallets is up or down in the storing unit, etc.

Possibly the registration means is preferably positioned in the lower half of the storing unit

In the context of the present invention, a "user" may be understood as a private person and/or a business/company, preferably a small/medium sized business/company.

In the context of the present invention, a "user unit" may be understood as a physical and/or a digital user unit, such as on an App or on a Card.

The system may be arranged both with a printer for receipt or with an electronic transfer to a card, which may be an App controlled card.

In the context of the present invention, an "open receiving portion" may be understood as the receiving portion is positioned out from the pallet storing unit. Furthermore, the system is ready for receiving a pallet.

In the context of the present invention, a "closed receiving portion" may be understood as the receiving portion is positioned into the pallet storing unit. Furthermore, the system is handling a received pallet and not ready for receiving another a pallet yet.

In one embodiment of the invention, the system may also be adapted to deliver one or more associated pallets to a user.

In the context of the present invention, the "deliver" function of the system may be understood as a further function that the system may provide to a user.

The user may therefore not only have the opportunity to hand-in pallet(s) for the system to receive, but further also have the opportunity to pick-up, buy, rend etc. pallets from the system, which will deliver one or more pallets to a user.

The system may therefore in one embodiment be a Pallet Receiving and Delivery system.

The embodiment is particularly, but not exclusively, advantageous for providing a dobble function for the user.

In one embodiment of the invention, the pallet receiving portion is a drawer arrangement comprising at least:
- a drawer for receiving one or more pallets.

The embodiment is particularly, but not exclusively, advantageous for ensuring that the receiving portion can only receive items being substantially in the size of a pallet, and thereby measuring the size intended for the pallets.

Such as a drawer may be measuring substantially W:800 x L:1200 x H:200 mm. This is only an example of dimensions of the drawer. It should not be seen as limiting. Thereby, it would not be possible to get arms or legs caught as the drawers must be closed for the machine to operate.

The machine may also be equipped with an emergency stop for further security.

In one embodiment of the invention, the drawer arrangement further comprises:
- a rail arrangement adapted to allow the drawer to move on,
- preferably, the rail arrangement is a pull-out rail, and/or
- preferably, the receiving portion is fixedly mounted on the rail arrangement, and/or
- preferably the drawer is manually pushed into the pallet storing unit on the rail arrangement.

The embodiment is particularly, but not exclusively, advantageous for proving a system, wherein the receiving portion easily can move in a preferred direction - Back and forth - Into and out from the storage unit.

It should be understood, that the "rail arrangement" comprises at least one or more rails.

In one embodiment of the invention, the drawer has at least substantially the inside dimensions:
- Width (W): between 900 and 700, preferably between 850 and 750, more preferably between 815 and 785, even more preferably between 810 and 800, most preferably substantially 805 mm,
- Length (L): between 1300 and 1100, preferably between 1250 and 1150, more preferably between 1215 and 1185, even more preferably between 1210 and 1200, most preferably substantially 1205 mm,
- Height (H): between 300 and 100, preferably between 250 and 150, more preferably between 215 and 185, even more preferably between 210 and 200, most preferably substantially 205 mm.

The embodiment is particularly, but not exclusively, advantageous for providing a drawer, that may only receive items being substantially in the size of a pallet, and thereby measuring the size intended for the pallets.

In one embodiment of the invention, the pallet storing unit comprises:
- a lift arrangement.

The embodiment is particularly, but not exclusively, advantageous for providing a system, wherein a stack/stable of pallets can be lifted either hydraulically and/or electrically and/or pneumatically by a lift arrangement.

The stack/stable may be lifted by a pair of gripping means, such as "claws" or the like on two opposite sides of the pallet(s).

Preferably the gripping means are when activated "gripping" under the lowermost pallet for allowing to lift the entire stack/stable in an upwards direction and/or in a downwards direction.

The gripping means may be moved towards the wall of the storing unit when the lift goes down and makes ready to lift a new lowermost pallet.

As an example of the function when a new pallet is handed in by a user and the pallet has to go down to the bottom of the stack of pallets that have already been handed in. If the stack/stable of pallets already being in the storing unit is lifted up the lift arrangement, such that the newest delivered pallet is moved under the stack preferably on rails, and then the stack/stable is lower by the lift arrangement and positioned on top of the newest lowermost pallet.

The lift arrangement can be any type of lift. An example may be a chain lift.

In one embodiment of the invention, the pallet storing unit comprises:
- a hydraulic actuator, and preferably a hydraulic pump.

In one embodiment of the invention, the pallet storing unit comprises:
- opening means for allowing removal of pallets from the storing unit, the opening means being such as a door or a gate.

The embodiment is particularly, but not exclusively, advantageous for providing a system wherein, when the storing unit is full, the opening means can be opened. A forklift or any other desired vehicle or remover can then remove the stack of pallets from the pallet storage unit.

The opening preferably being on the opposite side of the pallets storing unit.

In one embodiment of the invention, the pallet receiving system further comprises:
- a receipt system for providing a receipt to the user.

The embodiment is particularly, but not exclusively, advantageous for providing a system, wherein when the user has returned all their pallets, they identify that that have handed in all the pallets, preferably by pressing a button, and thereby receive a receipt from the machine, which can be redeemed in the store.

The receipt can be physical or digital, such as a value being transferred electronically to an App or a Card.

An advantage is thereby the economic incentive for the user.

Within the invention one embodiment is wherein the receipt system is a part of the user unit.

An example of this embodiment is that the receipt is printed out from the user unit to the user.

In one embodiment of the invention, the receipt system is adapted to provide a receipt, the receipt being one or both of:
- a physical receipt, preferably via a printer, such as a thermotransfer, and/or
- a digital receipt, preferably a receipt provided in an app (application program).

The embodiment is particularly, but not exclusively, advantageous for providing a system, wherein both opportunities for a receipt is possible to provide.

In one embodiment of the invention, the pallet receiving system further comprises:
- a security system comprising security means, preferably comprising one or more of the security means:
   - a warning lamp,
   - a status lamp,
   - an emergency stop, and/or
   - safety stops.

The embodiment is particularly, but not exclusively, advantageous for ensuring the safety of the system.

The system may have both an alarm and/or status system on site (e.g. Lamps that light up red) or an audio alarm. The system may also send a message or alarm to a user's mobile and or to service workers.

The safety stop may be activated, such as when opening means of the storage unit, such as a door or a gate is opened.

The system is preferably receiving a CE certification/marking.

In one embodiment of the invention, the pallet receiving system further comprises:
- a control system, such as a controller, preferably a programmable logic controller.

The embodiment is particularly, but not exclusively, advantageous for having a means that can controlled any function of the system.

In one embodiment of the invention, the pallet receiving system further comprises:
- activating means adapted to activate a lowering of the pallets to a removal level, preferably said activating means being a bottom, a physical bottom or digital bottom.

The removal level should be understood as a level, wherein a remover, such as a forklift, can remove the stack/stable of pallets from the pallet storing unit.

In one embodiment of the invention, the pallet receiving system further comprises:
- a receiving unit safety lock, and/or
- an opening means safety lock.

The embodiment is particularly, but not exclusively, advantageous for providing a system wherein, when the receiving portion, such as a drawer, with a pallet positioned in and is moved into the storage unit, the system ensures the security, that the receiving portion cannot be moved out from the storage unit before the pallet/stack of pallets has been lifted. After this lifting function, the receiving portion can be moved out and a new pallet can be inserted.

Also, the system ensures that the pallet is correctly inserted/positioned into the receiving portion, before the receiving portion can be moved into the storage unit.

In one embodiment of the invention, the pallet receiving system further comprises:
- a border, said border providing two areas:
   - a user area, wherein the user can insert a pallet into a receiving portion,
   - a storing area, wherein the received pallets are stored into a pallet storing unit, and preferably the pallets are further handled and stored in a storage area by workers,
- wherein said border can be:
   - visible, such as a wall, or
   - invisible, such as delimited by sensors.

The embodiment is particularly, but not exclusively, advantageous for ensuring the safety of the user.

In one embodiment of the invention, the user of the system are private persons and/or smaller business/companies.

The embodiment is particularly, but not exclusively, advantageous for ensuring that private person or small business have an easy access to a pallet return system, such that the pallets are reused.

In one embodiment of the invention, the system is arranged in a warehouse, a store or the like.

The embodiment is particularly, but not exclusively, advantageous for providing a system, wherein the receipt can be redeemed in the warehouse / store that the pallets are delivered to.

The receipt may therefore be redeemed at the partners involved in the process, such as warehouse, stores, hardware stores, shops, supermarkets, or the like.

In a second aspect, the invention further relates to a method for receiving one or more associated pallets being received from a user, preferably with a pallet receiving system (100) according to one or more of claim 1-13, wherein said method comprises the steps of:
- loading pallets into a receiving portion, preferably the receiving portion being a drawer arrangement,
- moving the receiving portion comprising a pallet into a pallet storing unit, preferably moving the receiving portion on a rail arrangement,
   - wherein the movement is made manually or automatically,
- registering a reception of a pallet,
- lifting the pallet in the storing unit, preferably automatically,
- repeating the above steps if more pallets are to be received,
- providing a receipt when all pallets are received, either a physical or digital receipt,
- preferably, redeeming the receipt in a store, warehouse or the like by the user,
wherein the steps of the method can be executed in any order and/or executed simultaneously.

The second aspect of the invention is particularly, but not exclusively, advantageous for providing a method ensuring an efficient handling and registration of pallets at the same time that the user receives a receipt and thus financial reimbursement for the returned pallets.

The method is moreover efficient and reliable.

In one embodiment of the invention, the method further comprises the steps of:
- ensuring the receiving portion is correctly moved into the storing unit, such as a drawer is closed under the storing unit,
- wherein when the receiving portion is not correctly moved into the storing unit, the system is automatically not allowing any further procedures.

The embodiment is particularly, but not exclusively, advantageous for ensuring the safety and security of the system.

In one embodiment of the invention, the method further comprises the step of:
- lifting the pallet or the stack of pallets (200) by a pair of gripping means, preferably being arranged to grip on two opposite sides of a lowermost pallet, and
- the gripping means are gripping under the lowermost pallet for allowing a lifting of the stack/stable of pallets in the storing unit (500) in an upwards direction,
- preferably the gripping means are moving towards the walls of the storing unit (500), when the lift is moving in a downwards for making ready to lift a new received lowermost pallet.

The embodiment is particularly, but not exclusively, advantageous for ensuring that the storing unit is always ready for receiving a new pallet handed in by a user. The lower part of the storing unit is free from pallets and available for the drawer to receive a pallet and to be moved into the storage unit with a new received pallet.

In one embodiment of the invention, the method further comprises the step of:
- removing the pallets from the pallet storing unit, preferably emptying the pallet storing unit from pallets.

In one embodiment of the invention, the removing of the pallets comprises the step of:
- opening an opening of the pallet storing unit, such as a door or a gate,
- removing a stack of pallets from the pallet storing unit, preferably by a forklift.

The embodiments are particularly, but not exclusively, advantageous for ensuring that the system is always ready to receive more pallets from a user.

The removing can be a forklift, electric stacker, pallet lifter or the like.

In one embodiment of the invention, the method further comprises the steps of:
- handling and/or storing the received pallets in a storage area.

The embodiment is particularly, but not exclusively, advantageous for ensuring that all the handed in pallets have enough area to be stored, and preferably handled.

In one embodiment of the invention, the method further comprises the steps of:
- redeeming by the user the receipt in the warehouse or store.

The embodiment is particularly, but not exclusively, advantageous for proving an economical advantage for the user handing in pallets.

In one embodiment of the invention, the method further comprise the step of:
- delivering one or more associated pallets to a user.

The embodiment is particularly, but not exclusively, advantageous for providing a double function for the user.

In a third aspect, the invention further relates to computer-readable medium, preferably a storage medium, comprising instructions which, when executed by a computer, cause the computer to carry out one or more steps of the method of the second aspect.

The first, second and third aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Figure 1 illustrates a 3D drawing of a pallet receiving system seen from a user side.
Figure 2 illustrates a 3D drawing of a pallet receiving system seen from a storing side.
Figure 3a illustrates a pallet receiving system seen from the front from a user side
Figure 3b illustrates a pallet receiving system seen from the side.
Figure 3c illustrates a pallet receiving system seen from an upper view.

### DETAILED DESCRIPTION OF THE INVENTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

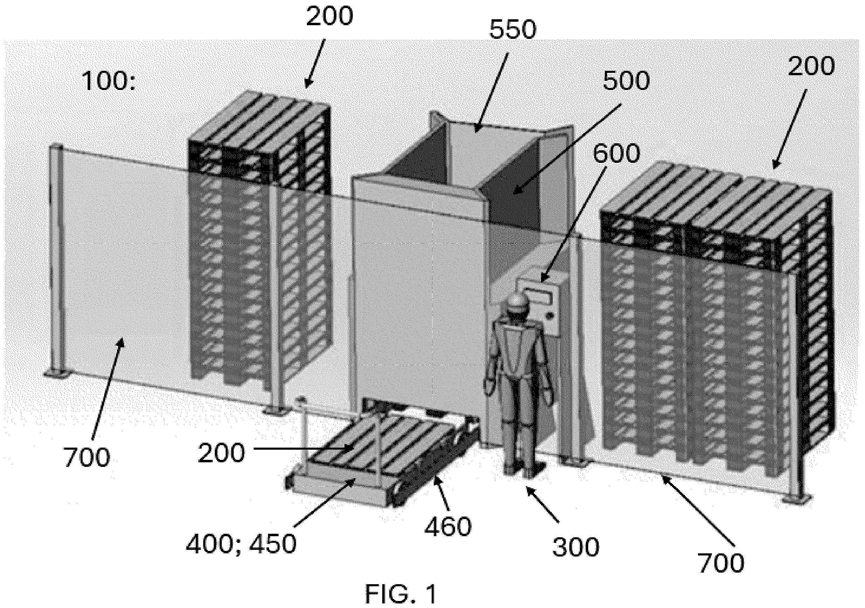

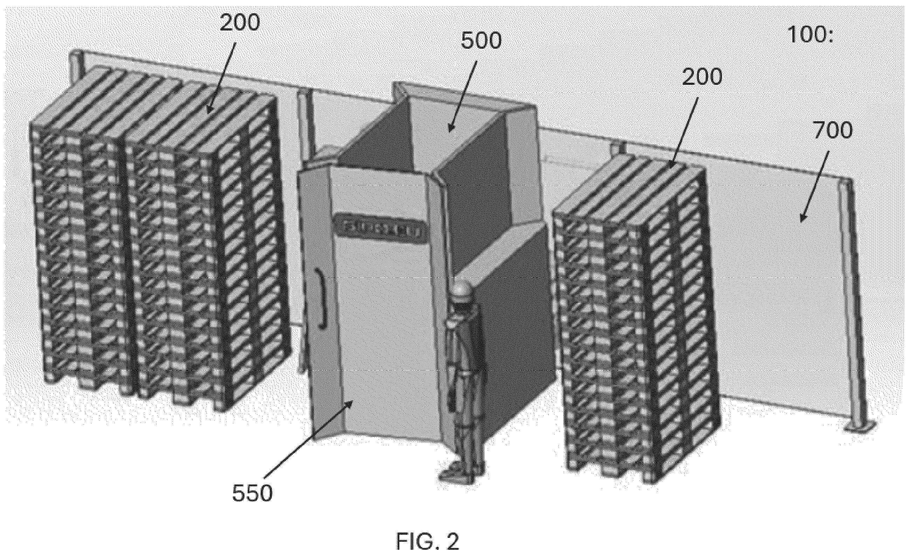

FIG. 1 illustrates a 3D drawing of a pallet receiving system 100 seen from a user side and FIG. 2 illustrates a 3D drawing of a pallet receiving system 100 seen from a storing side.

In detail, FIG. 1 and 2 illustrates a pallet receiving system 100 for receiving associated pallets 200 being received from a user 300, said system comprising:
- a pallet receiving portion 400 for receiving one or more pallets 200, in FIG. 1 being a drawer arrangement, comprising a drawer 450 for receiving one or more pallets.
- a pallet storing unit 500,
- a user unit 600 with a user interface for the user to engage with, and
wherein, the pallet receiving portion 400 is adapted to move into and out from the lower part of the pallet storing unit 500, preferably into and out from the bottom of the storage unit 500.

Furthermore, FIG. 1 illustrates pallet receiving system 100 in a first position FP, wherein the receiving portion 400 is open and positioned to receive a pallet 200 from the user 300. In the FIG. 1 a pallet 200 is inserted into the drawer 400.

FIG. 2 illustrates pallet receiving system 100 in a second position SP, wherein the receiving portion 400 is closed and positioned to store a received pallet 200 into the pallet storage unit 500.

In FIG. 1 and 2 the drawer arrangement further comprises:
- a rail arrangement 460 adapted to allow the drawer 450 to move on,
- preferably, the rail arrangement 460 is a pull-out rail, and/or
- preferably, the receiving portion 400;450 is fixedly mounted on the rail arrangement 460, and/or
- preferably the drawer 450 is manually pushed into the pallet storing unit on the rail arrangement 460.

Moreover, the pallet receiving system illustrates in FIG. 1 and 2 further comprises:
- a border 700, said border providing two areas:
   - a user area UA, wherein the user 300 can insert a pallet 200 into a receiving portion 400,
   - a storing area SA, wherein the received pallets 200 are stored into a pallet storing unit 500, and preferably the pallets 200 are further handled and stored in a storage area by workers,
- wherein said border 700 can be:
   - visible as in FIG 1 and 2, such as a wall, or
   - invisible, such as delimited by sensors (not shown).

In FIG. 1 and 2 is illustrated the pallet storing unit 500 comprises opening means 550 for allowing removal of pallets from the storing unit, the opening means being such as a door or a gate.

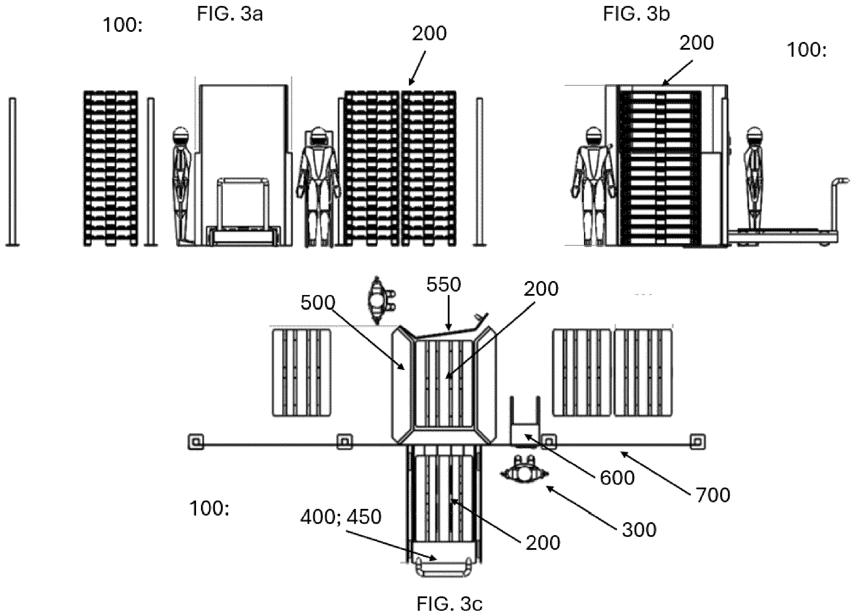

FIG. 3a illustrates a pallet receiving system 100 seen from the front from a user side.

FIG. 3b illustrates a pallet receiving system 100 seen from the side.

Fig. 3c illustrates a pallet receiving system 100 seen from an upper view.

The pallet receiving system 100 illustrated in 2D from different perspectives in FIG. 3a-b is corresponding to the system 100 illustrated in 3D in FIG. 1 and 2.

The system 100 illustrated in the FIG. 3a-c are preferably configured for performing af method for receiving one or more associated pallets 200 being received from a user 300, wherein said method comprises the steps of:
- loading pallets 200 into a receiving portion 400, preferably the receiving portion being a drawer arrangement, comprising a drawer 450,
- moving the receiving portion 400 comprising a pallet 200 into a pallet storing unit 500, preferably moving the receiving portion 400 on a rail arrangement 460,
   - wherein the movement is made manually or automatically,
- ensuring the receiving portion 400 is correctly moved into the storing unit 500, such as a drawer 450 is closed under the storing unit 500,
   - wherein when the receiving portion 450 is not correctly moved into the storing unit 500, the system 100 is automatically not allowing any further procedures.
- registering a reception of a pallet 200,
- lifting the pallet 200 in the storing unit 500, preferably automatically,
- repeating the above steps if more pallets are to be received,
- providing a receipt when all pallets 200 are received, either a physical or digital receipt,
- preferably, redeeming the receipt in a store, warehouse or the like by the user,
wherein the steps of the method can be executed in any order and/or executed simultaneously.

And wherein the method further comprises the step of:
- opening an opening means 550 of the pallet storing unit 500, such as a door or a gate,
- removing a stack of pallets 200 from the pallet storing unit 500, preferably emptying the pallet storing unit from pallets.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### REFERENCE LIST

Pallet receiving system (100)
Pallet(s) (200)
User (300)
Pallet receiving portion (400)
Drawer (450)
Rail arrangement (460)
Storing unit (500)
Opening means (550)
User unit (600)
Border (700)
A first position (FP)
A second position (SP)
User area (UA)
Storing area (SA)

## Claims

1. A pallet receiving system (100) for receiving associated pallets (200) being received from a user (300), said system (100) comprising:
- a pallet receiving portion (400) for receiving one or more pallets (200), preferably a drawer arrangement,
- a pallet storing unit (500),
- registration means for registration of received pallet(s), preferably being one or more sensors, such as optic and/or mechanical sensors,
- a calculating system for calculating the economic disbursement to the user,
- a user unit (600) with a user interface for the user to engage with, and
wherein, the pallet receiving portion (400) is adapted to move into and out from a lower part of the pallet storing unit (500), preferably into and out from the bottom of the storage unit, and
wherein the pallet receiving system (100) can take at least two positions:
- a first position (FP), wherein the pallet receiving portion (400) is open and positioned to receive a pallet (200) from the user (300),
- a second position (SP), wherein the pallet receiving portion (400) is closed and positioned to store a received pallet (200) into the pallet storage unit (500).

2. A pallet receiving system (100) according to claim 1, wherein the pallet receiving portion (400) is a drawer arrangement comprising at least:
- a drawer (450) for receiving one or more pallets (200).

3. A pallet receiving system (100) according to claim 2, wherein the drawer arrangement further comprises:
- a rail arrangement (460) adapted to allow the drawer (450) to move on,
- preferably, the rail arrangement (460) is a pull-out rail, and/or
- preferably, the pallet receiving portion (300) is fixedly mounted on the rail arrangement (460), and/or
- preferably the drawer (450) is manually pushed into the pallet storing unit (500) on the rail arrangement (460).

4. A pallet receiving system (100) according to one or more of the preceding claims, wherein the pallet storing unit (500) comprises:
- a lift arrangement, and
- preferably a hydraulic actuator, and preferably a hydraulic pump.

5. A pallet receiving system (100) according to one or more of the preceding claims, wherein the pallet storing unit (500) comprises:
- opening means (550) for allowing removal of pallets from the storing unit, the opening means being such as a door or a gate.

6. A pallet receiving system (100) according to one or more of the preceding claims, wherein the pallet receiving system further comprises:
- a receipt system for providing a receipt to the user,
wherein the receipt system is adapted to provide a receipt, the receipt being at least one or both of:
- a physical receipt, preferably via a printer, such as a thermotransfer, and/or
- a digital receipt, preferably a receipt provided in an App and/or on a card.

7. A pallet receiving system (100) according to one or more of the preceding claims, wherein the pallet receiving system further comprises:
- activating means adapted to activate a lowering of the pallets to a removal level, preferably said activating means being a bottom, a physical bottom or digital bottom.

8. A pallet receiving system (100) according to one or more of the preceding claims, wherein the pallet receiving system further comprises:
- a receiving unit safety lock, and/or
- an opening means safety lock.

9. A pallet receiving system (100) according to one or more of the preceding claims, wherein the pallet receiving system further comprises:
- a border (700), said border providing two areas:
- a user area (UA), wherein the user can insert a pallet into a receiving portion,
- a storing area (SA), wherein the received pallets are stored into a pallet storing unit, and preferably the pallets are further handled and stored in a storage area by workers,
- wherein said border can be:
- visible, such as a wall, or
- invisible, such as delimited by sensors.

10. A pallet receiving system (100) according to one or more of the preceding claims, wherein the system is arranged in a warehouse, a store or the like.

11. A method for receiving one or more associated pallets being received from a user, preferably with a pallet receiving system (100) according to one or more of claim 1-10, wherein said method comprises the steps of:
- loading pallets (200) into a pallet receiving portion (400), preferably the receiving portion being a drawer (450) arrangement,
- moving the pallet receiving portion (400) comprising a pallet (200) into a pallet storing unit (500), preferably moving the receiving portion on a rail arrangement (460),
- wherein the movement is made manually or automatically,
- registering a reception of a pallet,
- lifting the pallet or a stack of pallets in the storing unit (500), preferably automatically,
- repeating the above steps if more pallets (200) are to be received,
- providing a receipt when all pallets are received, either a physical or digital receipt,
- preferably, redeeming the receipt in a store, warehouse or the like by the user,
wherein the steps of the method can be executed in any order and/or executed simultaneously.

12. A method for receiving according to claim 11, wherein the method further comprises the steps of:
- ensuring the pallet receiving portion (300) is correctly moved into the storing unit (500), such as a drawer (450) is closed under the storing unit,
- wherein when the pallet receiving portion (300) is not correctly moved into the storing unit (500), the system is automatically not allowing any further procedures.

13. A method for receiving according to claim 11-12, wherein the lifting step comprises:
- lifting the pallet or the stack of pallets (200) by a pair of gripping means, preferably being arranged to grip on two opposite sides of a lowermost pallet, and
- the gripping means are gripping under the lowermost pallet for allowing a lifting of the stack/stable of pallets in the storing unit (500) in an upwards direction,
- preferably the gripping means are moving towards the walls of the storing unit (500), when the lift is moving in a downwards for making ready to lift a new received lowermost pallet.

14. A method for receiving according to claim 11-13, wherein the method further comprises the steps of:
- opening an opening means (550) of the pallet storing unit, such as a door or a gate,
- removing a stack of pallets (200) from the pallet storing unit (500), preferably by a forklift,
- preferably emptying the pallet storing unit (500) from pallets.

15. A computer-readable medium, preferably a storage medium, comprising instructions which, when executed by a computer, cause the computer to carry out one or more steps of the method of claim 11-14.
